# EUROPÄISCHE PATENTSCHRIFT

(11) **EP 0 625 129 B1**
(45) Veröffentlichungstag und Bekanntmachung des Hinweises auf die Patenterteilung: **29.04.1998**
(21) Anmeldenummer: 94900034.3
(22) Anmeldetag: 26.11.1993
(51) Int. Cl.: C04B 28/26, C04B 40/06

(54) **VERFAHREN ZUR HERSTELLUNG EINES KIESELSTOFF ENTHALTENDEN MATERIALS SOWIE DARAUS HERGESTELLTE MATERIALIEN**
PROCESS FOR PRODUCING SILICEOUS MATERIALS AND SILICEOUS MATERIALS THUS PRODUCED
PROCEDE DE PRODUCTION DE MATERIAUX SILICEUX ET MATERIAUX AINSI PRODUITS

(30) Priorität: 09.12.1992 CH 3763/92
(43) Veröffentlichungstag der Anmeldung: 23.11.1994
(73) Patentinhaber: MILLES, Victor Alexander, CH-8032 Zürich (CH)
(72) Erfinder: MILLES, Victor Alexander, CH-8032 Zürich (CH)
(74) Vertreter: Frei, Alexandra Sarah
(86) Internationale Anmeldenummer: CH9300269
(87) Internationale Veröffentlichungsnummer: WO9413597

(56) Entgegenhaltungen:
- EP-A- 0 478 864
- EP-A- 0 495 336
- DE-A- 4 104 596
- GB-A- 403 230
- Verein Deutscher Zementwerke, "Zementtaschenbuch 1979/80", 47. Ausgabe, Bauverlag GmbH, Wiesbaden, Berlin, DE

## Beschreibung

Die Erfindung liegt auf dem Gebiet der mineralischen Werkstoffe und betrifft eine Zusammensetzung auf der Basis von Füllstoffen, Soloxiden, Polysilikaten und, falls gewünscht, Pigmentiermitteln.

Aus der Kolloidchemie, insbesondere der Sol-Gel-Technik, sind eine Vielzahl von Werkstoffen bekannt geworden, mit welchen ganz spezifische Probleme gelöst werden konnten. Der zentrale Punkt liegt darin, dass aus flüssigen Komponenten feste, in sich vernetzte Werkstoffe hergestellt werden können. Während bei üblichen Dispersionen, einem Sol zum Beispiel, die disperse Phase relativ frei beweglich ist, ist sie es in einem Gel, in dem die Teilchen netzartig miteinander verbunden und daher nur schwer gegeneinander zu verschieben sind, nicht mehr. Kernpunkt in der Sol-Gel-Technik ist also der Übergang zwischen frei disperser und vernetzt disperser Phase. In der Regel ist der Uebergang von Sol zu Gel bei Werkstoffen nicht reversibel, der dispergierte feste Bestandteil ist netz- oder wabenartig im Dispersionsmittel verteilt, meist in Wasser, wobei das Dispersionsmittel mittels Wärme ausgetrieben wird, um einen festen vernetzten Werkstoff zu erhalten.

Problematisch ist die Finalisierung vom Gel zum Werkstoff, also das Vertreiben des Dispersionsmittels. Wünschenswert wäre es jedoch, dies nicht tun zu müssen, also das Dispersionsmittel weitgehend in den Werkstoff einzubauen. Dies sollte vorteilhafterweise ohne zusätzliche Verfahrensschritte geschehen, schon gar nicht mittels energieintensiven, wie Ausbrennen, Glühen und so weiter. Die Herstellung von Halbfabrikaten durch Zusammenmischen von Teilmischungen ist bekannt. Beispielsweise beschreiben die
- EP-A-0 478 864 ein Verfahren zur Herstellung von Trockenbeton, bei welchem ein Zement-Wasser-Kies-Granulat getrocknet wird, Sand aus dem Granulat entfernt wird und die Betonkomponenten dann gemischt, homogenisiert, angerührt und trocken gemischt werden;
- DE-A-41 04 596 ein Verfahren zur Herstellung einer selbsthärtenden wasserhaltigen Mischung aus zwei Komponenten, einer ein anorganisches Bindersystem enthaltenden ersten Komponente und einer ein hydraulisch abbindendes Bindersystem enthaltenden zweiten Komponente, wobei diese zwei Komponenten kurz vor dem Einsatz gemischt und dabei gegebenenfalls auch zuschläge eingemischt werden.

Das hier vorgeschlagene Verfahren gemäß Anspruch 1 zur Herstellung von anorganisch modifizierten Oxiden (der Erfinder nennt sie abkürzenderweise AMOXIDE), durch welche harte und feste, vernetzte, in Schichten transparente oder kristallin scheinende Mehrkomponentenhalbfabrikate oder -werkstoffe bei niederer Temperatur wie bspw. Raumtemperatur hergestellt werden können. Im Vergleich zum obengenannten Stand der Technik stellt dies eine weitere, interessante Bereicherung auf diesem Gebiet dar. Bevorzugte Ausführungsformen des Verfahrens werden in den Ansprüchen 2 bis 17 beansprucht. Die Verwendung der Halbfabrikate in Verfahren zur Herstellung von festen, mineralischen Werkstoffen sowie Produkte daraus werden in den Ansprüchen 18 bis 23 beansprucht.

Die in den Patentansprüchen definierte Erfindung zeigt, wie man zu solchen zu Werkstoffen weiterverarbeitbaren Halbfabrikaten kommt. Man erhält daraus vielseitig verwendbare, anorganische Werkstoffe, die in grossen Mengen hergestellt werden können.

Die zugrunde liegende Idee geht davon aus, dass nicht nur auf die Vernetzung der festen dispersen Phase im Dispersionsmittel abgestellt wird, sondern die feste disperse Phase als Uebermatrix verwendet wird, um Makropartikel darin einzubauen, wobei das Dispersionsmittel im Werkstoff schliesslich chemisch abgebunden wird, von dem Abbindmittel jedoch soviel in Überschuss beigegeben wird, dass mit einer späteren Zugabe von Dispersionsmittel das Vorprodukt zum gewünschten Werkstoff finalisiert werden kann. Dies ergibt ein lagerfähiges aber immer noch reaktionsfähiges Halbprodukt, das mit Dispersionsmittel (in der Regel ist das Wasser) angemischt, fertig reagiert und zum Endprodukt führt.

Dazu wird ein matrixfähiger Corpus aus füllkörperartigen Makropartikeln und Soloxid, Polysilikat (Vernetzungsstoffe) und einem Puffer zur Unterstützung der Bildung der Uebermatrix zusammengestellt und verarbeitet. Dieser Corpus ist unter anderem pigmentierfähig, sodass sich eine grosse Beschaffenheitsvarietät erzielen lässt. Dies wird erreicht, durch die Einführung einer Variationsmischung in den Corpus. Der auf das gewünschte Ziel ausgerichtete, variierte Corpus wird in zwei nachfolgenden Verfahrensschritten in das gewünschte Halbprodukt überführt: durch einen Verfahrensschritt zur Hydratisierung und Balancierung und durch einen nachfolgenden Verfahrensschritt zur Abbindung und Stabilisierung. Das noch reaktionsfähige, stabilisierte Halbprodukt kann zu einem späteren Zeitpunkt zu einem fertigen Werkstoff ausreagiert werden, indem es mit Dispersionsmittel versetzt wird, wodurch die finale Reaktion einsetzt. Dies geschieht bei niederen Temperaturen (unter 150 °C, in den überwiegenden Fällen sogar unter 100 °C).

In der Folge wird anhand eines ersten qualitativen Basis-Beispiels das Prinzip mehr detailliert diskutiert und dann anhand eines quantitativen Basis-Beispiels das Prinzip nachvollziehbar gemacht und anschliessend werden gemäss der obigen Gruppierung Substanzen diskutiert, die zur Herstellung solcher Werkstoffe sich eignen und zum Schluss werden einige ausgeführte Beispiele aus der experimentellen Tätigkeit vorgestellt.

### Das qualitative Basis-Beispiel:

- Komponente A:: (Füllstoffteil) umfasst die Füllstoffe wie bspw. Glassand (Bruchglas) evtl. mit zähen Fasern versetzt (Kohlefasern, Kevlar, Steinwolle, Glasfasern etc.). Je nach Werkstoff, der erzielt werden soll, sind diese Partikel kleiner oder grösser, sie liegen aber deutlich (um ein Vielfaches) über der Kolloid-Grenze der für die Uebermatrix verwendeten Dispersion.
- Komponente B:: (Reaktionsteil) umfasst einen Säureteil, der alleine oder mit Soloxid zusammen, wie bspw. Kieselsol, Aluminosol, Titansol, Zirkonsol etc., wobei die Sole einen möglichst hohen Oxidgehalt aufweisen sollen. Damit ein reaktiveres Endprodukt entsteht, werden feste Säuren, bspw. Borsäure, zugegeben. o-Phosphorsäure konz. dient als saures Reaktionsmedium und mit einem Anteil unsoliertem Oxid, bspw. Si-Oxid (pyrogene Kieselsäure, Aerosil) zum Kieselsol, wird der Soloxidgehalt erhöht. Ausserdem wirkt die Aufsolierung als Gelierverzögerungsmittel (für bessere Lagerstabilität). In die Komponente B können allenfalls Pigmentier- oder Färbestoffe (Komponente B') einbezogen werden, insbesondere solche, welche zwei Komponenten umfassen, wobei eine hier und die andere in die Komponente V eingebracht wird.
- Komponente C:: (Pufferteil) aus einem Gemisch von Soloxid mit einem Polysilikat bspw. im Verhältnis 1:1, das mit 1% eines Metall-Oxids (Al, Ti, Zr etc.) als Antiklumpmittel versehen ist. Auch hier wird eine Art Aufsolierung angestrebt. Das Polysilikat ist eine stark alkalisch wirkende Komponente.

Füllkörper (Komponente A), Reaktionsteil (Komponente B), Pufferteil (Komponente C), bilden den Corpus (ABC) für weitere Variationen des Endproduktes. Eine Variationsmischung, die dem Corpus beigegeben wird, wird folgendermassen hergestellt:
- Komponente V:: (Variationsteil) wird aus einer oder mehreren der unten aufgeführten Vormischungen erstellt. Sie enthält Pigmentierungsmittel in Form von Metallsalzen wie Aluminium-, Eisen-, Kupfer-, Chromsalze etc. Diese Zugabe geschieht entweder separat durch eine Variationsmischung zum Corpus oder durch Zugaben zur Komponente B.
- Vormischung V1:: bspw. ein Soloxid-Verwandter Stoff, bspw. Kaliumsilikat, -trisilikat und ein Metall-Oxid, bspw. von Al, Si, Ti, Zr, mit Borsäure. Auch Hydroxide, vorzugsweise Zirkonhydroxid, auch Calciumhydroxid oder Zemente (und Borsäure).
- Vormischung V2:: ein weiteres Soloxid wird mit einer Mischung von Phosphorsäure und Borsäure gemischt, bspw. ein Soloxid von Zirkon, Aluminium, Titan, Silicium etc. (beziehungsweise eine Mischung von zwei oder drei dieser Oxide (Variation) werden miteinander getrennt gemischt).
- Variationsmischung:: die beiden Vormischungen V1 und V2 werden miteinander zur Herstellung der Komponente V vermischt und (evtl. wird nochmals eine feste Säure, bspw. Borsäure zugegeben) ein Hydroxid wie Zr-Hydroxid, Ca-Hydroxid etc., hier bspw. Zirkonhydroxid, zugegeben und (innig) miteinander vermischt und gut homogenisiert. Dies ergibt farblose, schwachfarbige oder farbige Mischungen, die zu den angezielten Zwecken in den Corpus eingebracht werden. Je nach Füllstoff wird die Variationsmischung hergestellt.

Die 3 Komponenten A,B,C werden folgendermassen zu einem Corpus miteinander vermischt und mit der Komponente V variiert:

### Bildung des Corpus:

Komponente A wird mit Komponente B oder B' vollständig benetzt, so dass eine Konsistenz wie nasser Sand entsteht (bei Zugaben zur Erzielung einer pigmentierten Komponente B' ist eine Verweilzeit zu beachten, in welcher die Einfärbung bzw. die chemische Reaktion zu einer solchen geschieht. Ohne Säurezugabe in B geschieht die Farbreaktion nicht). Nach der nötigen Verweilzeit, in der die Konsistenz von nassem Sand erhalten bleibt, wird die Komponente C zugesetzt. Sie wird in den "nassen Sand" eingegossen und innig vermengt. Zur Vermeidung von Klumpenbildung kann man die Mischung durch ein Sieb passieren. Die Konsistenz bleibt ähnlich einem nassen Pulver, neigt jedoch zum Gelieren, also zur Ausbildung der Uebermatrix, ist aber rieselfähig und sollte so rasch als möglich weiterverarbeitet werden.

### Variation des Corpus:

Der entstandene Corpus (nass, rieselfähig) wird mit der Variationsmischung vermengt, wodurch ein fast trockenes Pulver entsteht. In der Variationsmischung sind schon Komponenten zur Einbindung des Dispersionsmittels vorgesehen. Vorzugsweise siebt man das entstandene Pulver, um eventuelle Klumpen zu zerkleinern und die Mischung zu homogenisieren. Die entstandene Mischung lässt man ca. 1 bis 5 Stunde/n stehen. Das Pulver wird durch die Einbindung des Dispersionsmittels immer trockener (Wasserbindungszeit, Hydratisierung). Die entstandene trockene, pulverförmige Mischung (mit verschiedenen Korngrössen) ist noch nicht lagerstabil und sollte innert nützlicher Zeit weiterverarbeitet werden. Der Dispersionsmittel-Einbau muss noch weitergetrieben und finalisiert werden.

### Die Hydratisierung und Balancierung:

Der variierte Corpus wird mit einem Hydratisierungsmittel (Startersubstanz), bspw. Metasilikat "angeworfen" (Hydratisieren). Dies geschieht durch inniges Mischen, wobei die Mischung spürbar warm wird. Während des Mischens giesst man weiteres Soloxid mit Polysilikat zu (Balancieren). Der Mischvorgang wird fortgesetzt, bis ein trockenes Pulver entsteht. Beim Zugiessen des Soloxids und Polysilikats nimmt die Wärme zu. Das Metasilikat dient (vermutlich) als Wasserbinder (Hydratisierung). Nach diesem Arbeitsvorgang hat man ein trocken werdendes Pulver, aber noch kein lagerstabiles Pulver.

### Abbindung und Stabilisierung:

Es ist ja das Ziel, ein (noch) reaktionsfähiges, stabiles Produkt herzustellen. Die nächsten Schritte leiten die Stabilisierungsphase ein. Das so hergestellte Pulver wird also weiter verarbeitet. Das nun trockene Pulver enthält Reste von eingebundenem Wasser, das durch Versetzen von weiterem Metasilikat hydratisiert wird. Beim Einmischen des Metasilikats entsteht wieder Wärme und das Pulver wird zunehmend feucht und klebrig. Bevor es wieder in eine trockene, pulverförmige Konsistenz übergeht, werden hydroxylierende (abbindende, möglicherweise katalysierende) Substanzen, bspw. Hydroxide von Ca, Al, Mg, Zr, etc. zugegeben und kräftig gemengt, bis ein einheitliches Granulat entsteht. Damit hat man das stabile, reaktionsfähige Endprodukt mit einem Überschuss an Hydratisiermittel erreicht, das in einem späteren Schritt mit Zugabe von Dispersionsmittel zu einem entsprechenden Werkstoff umgesetzt werden kann. Natürlich könnte man auch an dieser Stelle die finalisierenden Schritte einleiten, sofern man den Werkstoff haben möchte. Es ist jedoch der Sinn darin zu sehen, dass bspw. ein Halbfabrikat-Granulat mit bspw. Wasser angerührt werden kann, beliebig appliziert werden kann und dann bei Raumtemperatur bspw. zu einer Schicht oder einem Block oder zu kalandrierten Platten etc. aushärtet.

### Das quantitative Basis-Beispiel:

- Komponente A:: 300 g Glassand (Bruchglas) evtl. mit zähen Fasern (Kohlefasern, Kevlar, Steinwolle, Glasfasern etc.).
- Komponente B:: 25 g eines Gemisches von 100 g Kieselsol (bspw. Levasol 200/40% von Bayer-Leverkusen) oder ein Soloxid wie Si-Oxid-Sol, Al-Oxid-Sol, (Ti-Oxid-Sol, Zi-Oxid-Sol etc., z.T. im Handel nicht erhältlich) hier aber Kieselsol (Si-Oxid-Sol) vorzugweise 50% oder höher im Kieselgehalt, werden mit 5 g o-Phosphorsäure konz. im Verhältnis 100:30 g Borsäure versetzt. Die Borsäure wird zur Pufferung, zum Teil mit Wirkung einer Gelierbeschleunigung zugegeben. Es können auch andere Puffer wie Aluminiumoxid, Zirkonoxid (Degussa) oder andere Oxide verwendet werden. Ohne die Zugabe von Borsäure findet eine Verzögerung der Gelierung statt.
- Komponente C:: 25 g eines Gemisches von Soloxid (hier Kieselsol 40%, Kieselsol 50% führt zu einer Sedimentation der Mischung) mit Lithiumpolysilikat 40% (Van Baerle, Münchenstein BL, Schweiz) im Verhältnis 1:1, (kann zusätzlich mit 0,5-1% eines Oxids (Al, Ti, Zr etc.) als X Antiklumpmittel versehen werden).
- Vormischung V1:: 100 g Kaliumsilikat oder -trisilikat und 5 g Al-Oxid, 10 g Borsäure (oder Zr-Hydroxid (MEL Magnesium Electrode Ltd, Manchester GB), Ca-Hydroxid) werden miteinander gemischt, evtl. mit Pigmentzugabe in Form von anorganischen Pigmenten (Spinell, Lapislazuli (bspw. Van Baerle) etc.) oder von Metallsalzen vom Aluminium, Eisen, Kupfer, Chrom, Kobalt, Mangan etc.
- Vormischung V2:: 50 g Kieselsol 50% aus einer Mischung von 100:5 g ortho-Phosphorsäure werden im Verhältnis 100:30 g Borsäure miteinander vermischt.
- Komponente V:: die beiden Vormischungen V1 und V2 werden miteinander gemischt, vollständig getrocknet und nochmals (innig) miteinander vermischt und gut homogenisiert, und mit 10-20 g eines Carbonates wie Ca-Carbonat, Zirkoncarbonat (MEL) etc. (oder Hydroxides wie Ca-Hydroxid, Zirkonhydroxid etc.) versetzt und wieder gut vermischt.

Die 3 Komponenten A,B,C werden folgendermassen miteinander zu einem Corpus vermischt:

Komponente A (300g) wird mit Komponente B oder B' (25g) vollständig benetzt, so dass eine Konsistenz wie nasser Sand entsteht (bei B' ist eine Verweilzeit zu beachten, in welcher die Einfärbung bzw. die chemische Reaktion zu einer solchen geschieht. Ohne Säurezugabe in B geschieht die Farbreaktion nicht). Nach der nötigen Verweilzeit, in der die Konstistenz von nassem Sand erhalten bleibt, wird die Komponente C (25g) zugesetzt. Sie wird in den "nassen Sand" eingegossen und innig vermengt. Zur Vermeidung von Klumpenbildung kann man die Mischung durch ein Sieb passieren. Die Konsistenz bleibt ähnlich einem nassen Pulver, neigt jedoch zum Gelieren, ist aber rieselfähig und sollte weiterverarbeitet werden.

Die entstandenen 350 g der Mischung aus A,B,C (nass, rieselfähig) werden mit der Komponente V (80g Pulver, trocken) vermengt, wodurch ein fast trockenes Pulver entsteht. Vorzugsweise siebt man das entstandene Pulver, um eventuelle Klumpen zu zerkleinern und die Mischung zu homogenisieren. Die entstandenen 430 g Mischung lässt man ca. 1 bis 5 Stunde/n stehen. Das Pulver wird immer trockener (Wasserbindungszeit, Hydratisierung). Die entstanden trockene, pulverförmige Mischung (mit verschiedenen Korngrössen) ist nicht lagerstabil und sollte innert nützlicher Zeit weiterverarbeitet werden.

Die 430 g des oben hergestellten Gemenges werden mit 20 g Na-metasilikat (puderförmig) versetzt und damit "anreagiert". Dies geschieht durch inniges Mischen, wobei die Mischung spürbar warm wird. Während des Mischens giesst man sukzessive 50 g Soloxid-Polysilikat (Lithiumpolysilikat) im Verhältnis 3:1 zu (Balancierungsmittel). Der Mischvorgang wird fortgesetzt, bis ein trockenes Pulver entsteht. Beim Zugiessen des Soloxides nimmt die Wärme zu. Das Metasilikat dient (vermutlich) als Wasserbinder (Hydratisierung). Nach diesem Arbeitsvorgang hat man 500 g eines trockenen Pulvers. Um eine rieselfähige Kornmischung zu erhalten, wird die gewonnene Menge nochmals durch ein Sieb gestossen, bevor sie dann verarbeitet wird.

Die gewonnenen 500 g des Gemisches werden in folgender Weise weiter verarbeitet. Das trockene Pulver enthält gebundenes Wasser, das durch Versetzen von weiteren 20 g Metasilikat weiter hydratisiert wird. Beim Einmischen des Metasilikats entsteht Wärme und das Pulver wird zunehmend feucht und klebrig. Bevor es wieder in eine trockene, pulverförmige Konsistenz übergeht, werden 50-60 g einer hydroxylierenden Substanz, bspw. Hydroxide und/oder Carbonate bzw. Hydrogencarbonate von Ca, Al, Mg, Zr etc. oder eine Kombination von hydroxylierenden Substanzen mit einem Zement zugegeben und kräftig gemengt, bis ein einheitliches Granulat entsteht. Damit erhält man ca. 600 g Endprodukt.

Das Endprodukt ist lagerfähig, muss aber vor Feuchtigkeit geschützt werden. Je nach Pigmentierung sind es verschiedenfarbige Granulate, je nach Grundsubstanz (d.h. Quarzsand, Glasmehl etc.) sind es glänzendere oder stumpfere Granulate. Man kann diese Granulate mit Wasser anrühren. Je nach teigförmiger bis fliessfähiger Konsistenz kann die Substanz aufgestrichen, gespachtelt, kalandriert, vergossen oder gespritzt werden. Auf eine Oberfläche wie Glas, Metall, Keramik, Beton oder Holz ausgegossen oder sonstwie appliziert, haftet die Masse und reagiert an der Luft bei Raumtemperatur zu einer trokkenen, harten, mineralisch sich anfühlenden Schicht aus. Das ausreagierte Produkt ist wasserfest, zäh, hart, resistent gegen die meisten mechanischen Einwirkungen und kann auch als Steinleim oder als anorganischer Kleber verwendet werden. Die Verwendungsfähigkeit ist schier unbegrenzt.

Die verschiedenen Zusätze von festen und flüssigen Silikaten in Kombination mit den Metalloxiden und -Hydroxiden führen zu verschiedenen Effekten, bspw:
- Aluminiumoxid:: macht Schichten eher spröde mit Neigung zu Schwundrissen, Vernetzung zu Konglomeraten, grobe Oberfläche;
- Titanoxid:: unterscheidet sich durch eine Pigmentierung und homogeneren Verbindung, Macht spröde, harte Schichten. Vernetzt sich zu Konglomeraten, mittelgrobe Oberfläche.
- Siliciumoxid:: verzögert eher den Reaktionsprozess, führt aber zu homogeneren Schichten;
- Zirkonoxid:: wenig Schwundrisse und gute Balance zwischen pH-Wert und Kristallisation, leichte Pigmentierung.

Die oben angegebenen Phänomene wurden bei den Variationsexperimenten beobachtet. Sie sind rein empirisch aufzufassen.

### Die Gruppierungen:

### Komponenten des Corpus:

- A: Borosilikatglas, Glassand, Giessereisand, mineralische Sande, Borosilikat, Fasermaterial organisch und anorganisch, Quarzsand, Aluminiumoxid (Korund weiss).
- B: Phosporsäuren, Borsäure und evtl. Soloxide wie Siliciumoxid-Sol (Kieselsol), Aluminiumoxid-Sol, Titanoxid-Sol, Zirkonoxid-Sol, sowie deren Trockenoxide zur Aufsolierung, Zirkonacetat, Kaolin.
- C: Soloxide und in Alkalihydroxiden gelöste Soloxide, Polysilikate (Natronwasserglas, Kaliwasserglas) wie Lithiumpolysilikat.

### Variation des Corpus (mit Komponente V):

Natriumsilikat, Kaliumsilikat, Ca-Hydrogencarbonat, Zirkoncarbonat, Titancarbonat bzw. deren Hydroxide und die Oxide von Silicium, Aluminium, Titan, Zirkon in gegenseitiger Vermischung. Zur Pigmentierung anorganische oder mineralische Pigmente oder Pigmentierstoffe wie Metallsalze, bspw. Aluminium-, Eisen-, Kupfer-, Chromsalze, -sulfate, -nitrate, -hydroxide etc.

### Vormischungen (einige Beispiele):

- Vormischung V1:: 100 g Kaliumtrisilikat, 10 g Borsäure werden miteinander gemischt → trockene Vormischung.
- Vormischung V2:: je 5 g eines Oxids von Zirkon, Aluminium, Titan, Silicium etc. oder je 2,5 bis 5 g von zwei verschiedenen der obigen Oxide werden miteinander gemischt (und V1 zugegeben) → trockene Vormischung.
- Vormischung V3:: 100g basisches Kieselsol 40% (bspw. Levasil, Bayer-Leverkusen) vermischt mit einem Anteil von 5 bis 10g Phosphorsäure und Borsäure im Verhältnis 100:30 g. Diese Mischung ist weniger alkalisch als V6 und eignet sich daher für Füllstoffe mit geringerer Alkalibeständigkeit wie z.B. Glassand u.a. → nasse und saure Vormischung.
- Vormischung V4:: 100g basisches Kieselsol 40% vermischt mit einem Anteil von 5 g Phosphorsäure ergibt eine Kombination im sauren Bereich was für eine Verzögerung der Gelierung von Vorteil ist → nasse und saure Vormischung.
- Vormischung V5:: 50 g einer Mischung von 3 Teilen bas. Kieselsol 40% und 1 Teil Lithiumpolysilikat (dient als Puffer für die Vermischung von V3 und V4) → nasse und basische Vormischung.
- Vormischung V6:: 200g basisches Kieselsol 540% vermischt mit einem Anteil von 5g Al-Oxid und 10g Ca-Hydrogencarbonat. Diese Mischung ist alkalisch und gut für bestimmte mineralische Füllstoffe jedoch nicht geeignet für Glassand. -> nasse und basische Vormischung.
- Vormischung V7:: 10-20 g Ca-Hydroxid (Zr-Hydroxid) werden den kombinierbaren Vormischungen V1 - V5 im Trockenzustand beigefügt und innig vermischt → trockene Vormischung.
- Vormischung V8:: 100g Kalium-Trisilikat mit einem Anteil von 10 g Zirkonhydroxid, 50g basisches Kieselsol 40% gemischt mit 5g ortho-Phosphorsäure werden innig vermengt und während 8 bis 12 Stunden getrocknet und wegen Klumpen durch ein feines Sieb passiert. Dieses Pulver wird mit 100g Wasser und bis zu 50g Pulver verrührt -> trockene Vormischung. Als wässerige Dispersionslösung dient die Vormischung V8 als Überzug und filmbildender Porenversiegler bei Materialien welche aus Kieselstoffen hergestellt werden.

Diese Vormischungen werden jeweils einzeln als Komponente V oder, wie im oben diskutierten Beispiel in Mischung untereinander zu einer Komponente V verwendet. Auf diesen Mischungen basiert das System der Variation des noch reaktionsfähigen Vorproduktes (mit Dispersionsmittel anrührbare Granulate) zu Werkstoffen mit den gewünschten Eigenschaften wie Oberflächenbeschaffenheit, Härte, Farbe und so weiter. Wichtig sind unter anderem Kohlesäurebildner wie Carbonate, Hydrogencarbonate bspw. von Calcium oder Zirkon. Bei Carbonaten wird in der Reaktion mit den Vormischungen V3 und V4 Kohlensäure freigesetzt und damit eine bessere "Vernetzung" erzielt. An Stelle von basischen Kieselsolen können auch saure Kieselsole verwendet werden; die verwendeten basischen Kieselsole enthalten eine höhere Si-Konzentration (bis 50% Si) als saure Kieselsole (bis ca. 30% Si).

Die Vormischungen V5 und V6 werden auch als Balancierungsmittel eingesetzt, das nach oder während dem "Anreagieren" der Mischung ABCV mit Metasilikat (Hydratisierungsmittel) zugegeben wird.

### Hydratisierung und Balancierung:

Metasilikate wie bspw. Kaliummetasilikat, Natriummetasilikat als Hydratisierungsmittel und Vormischungen V5 oder V6 oder ähnliches (siehe Beispiele) als Balancierungsmittel.

### Abbindung und Stabilisierung:

Metasilikate (wie oben), Hydrocarbonate oder Hydroxide wie Calciumhydroxid, Magnesiumhydroxid, Aluminiumhydroxid, Titanhydroxid, Zirkonhydroxid, weitere Hydratisierungsprodukte wie Weisszement, Portlandzement, oder eine Kombination von Zementen und Hydroxiden bzw. neue Hydratisierungsprodukte, welche spezifisch auf die erwünschte mineralische Zusammensetzung modifiziert werden, bspw. mit einer Kombination von Klinkermineralien.

### Quantitative Variationen zu den Basisbeispielen:

### Beispiel I: (hydroxidisches Beispiel)

- Komponente A:: 300g Borosilikatglassand (Berger + Bachmann, Buchs AG, Schweiz)
- Komponente B:: 5g eines Gemisches von 100g Kieselsol 40% (Levasil) mit einem Anteil von 5g o-Phosphorsäure im Verhältnis 100:10 g Borsäure
- Komponente C:: 25g eines Gemisches von 100g Kieselsol 40% im Verhältnis 1:1 mit 40% Lithiumpolysilikat (Van Baerle, Münchenstein, BL, Schweiz)
- Vormischung:: (gebildet aus den Vormischungen V1,V2 und V3) bestehend aus den 75g einer Pulvermischung von 100g Kalium-Trisilikat (Van Baerle), 5g Zirkonoxid (MEL) und 10 g Borsäure und 50g eines Gemisches von 100g Kieselsol 40% mit einem Anteil von 5g eines Gemisches von Phosphorsäure 100:10 g mit Borsäure (Komponente B) vermischt und ca. während 8 bis 12 Std, bei Raumtemperatur getrocknet.
- Vormischung V7:: 10-20g je einen Anteil von 10g Ca-Hydroxid (10g Zirkonhydroxid (MEL)) werden zur obigen Vormischung (V1,V2 und V3) gemischt
- Komponente V:: 70-80 g von beiden Vormischungen V1-V3 und V7 werden miteinander vermischt und gut homogenisiert (bspw. durch ein Haarsieb),

Die Komponenten A,B,C, werden folgendermassen miteinander vermischt:

Komponente A (300g) wird mit Komponente B (5g) vollständig benetzt, sodass eine Konsistenz wie nasser Sand entsteht. Die Komponente C (25g) wird in den "nassen Sand" eingegossen und innig vermengt. Nach dem Mischvorgang neigt die Marge zum Gelieren und wird dadurch rieselfähig, bleibt aber noch feucht.

Die entstandene 330g Mischung ABC (feucht rieselfähig) werden mit der Komponente V (80g Pulver trocken) vermengt, wodurch ein fast trockenes Pulver entsteht. Um die Mischung zu homogenisieren und ev. Klumpen zu zerkleinern, wird die Marge durch ein Sieb gestossen. Die entstandene 410g Mischung lässt man ca. 1 bis 2Std. stehen. Das Pulver wird durch die Wasserbindungszeit hydratisiert zu einer körnigen Pulvermischung welche weiterverarbeitet wird (nicht lagerstabil).

Die 410 g des oben hergestellten Gemenges werden mit 20g Na-Metasilikat versetzt. Dies geschieht durch inniges Mischen, wobei die Mischung etwas klebrig und feucht wird. Während dem Mischen giesst man sukzessive 50g eines Gebindes aus 200g Kieselsol. 40% mit einem Anteil von 5g Al-Oxid und 10g Ca-Hydrogencarbonat (V6 als Balancierungsmittel) dazu. Während dem Zugiessen des Soloxides reagiert das Metasilikat als Wasserbinder und hydratisiert die Marge von 480g langsam während ca. 1 bis 5 Std. zu einem körnigen Sand mit versch. Korngrössen. Nach Ablauf der Abbindezeit neigt die Mischung zu Klumpenbildung und um rieselfähige Körner herzustellen, wird die Marge nochmals durch ein Sieb gestossen.

Die gewonnenen 480g des Gemisches werden in folgender Weise weiterverarbeitet. Das trockene Korngut enthält gebundenes Wasser, das durch Versetzen von weiteren 20g Na-Metasilikat weiter hydratisiert wird. Dabei entsteht ein feuchter u. klebriger Zustand, welchem eine hydroxylierende (katalysierende) Substanz zugesetzt wird. Als Ersatz für neue Hydratisierungsprodukte bei welchen die prozentualen Anteile von:

Tricalciumsilikat [(3 CaO·SiO₂ (C₃S)], Dicalciumsilikat [(2 CaO·SiO₂ (C₂S)], Tricalciumaluminat [(3 CaO·Al₂O₃ (C₃A)], Tetracalciumaluminatferrit [(4 CaO·Al₂O₃·Fe₂O₃)], Calciumsulfathydrat [(CaSO₄·2H₂O (C₄AF)] und Calciumoxid (CaO) für spezifische Material-Modifikationen formuliert werden, kann an Stelle 50 bis 70g Weisszement in Kombination mit Ca-Carbonaten, Ca-Hydroxiden, Kaolin u.a. zugegeben werden, bis unter kräftigem Mischen ein einneitliches Granulat von ca. 570g entsteht.

Das Endprodukt ist eine chem. modifizierte Mischung welche stufenweise an der Reaktion gehindert wird und nachträglich bei der Weiterverarbeitung als Basismaterial stufenweise in verschiedene Aggregatzustände überführt wird, bis ein irreversibler chem. Prozessmechanismus abgeschlossen ist. Als Basismaterial und Ausgangsstoff vor der Verarbeitung, ist das Endprodukt lagerfähig, muss aber vor Feuchtigkeit geschützt werden. Je nach Pigmentierung sind es verschiedenfarbige Granulate, je nach Grundsubstanz (d.h. Quarzsand, Glas- oder andere mineralische Sande) sind es glänzendere oder stumpfere Granulate. Man kann diese Granulate mit Wasser anrühren. Je nach teigförmiger bis fliessfähiger Konsistenz kann die Substanz kalandriert, gespachtelt, vergossen oder gespritzt werden. Auf eine Oberfläche wie Glas, Metall, Keramik, Beton oder Holz bzw. Kunststoff ausgegossen oder sonstwie appliziert, haftet die Masse und reagiert durch Umsetzung mit der Luftkohlensäure und dem Untergrund durch sog. Verkieselung, bei welcher ein mehr oder weniger kristallines Gefüge entsteht. Das ausreagierte Produkt ist wasserfest, zäh, hart, resistent gegen die meisten mechanischen Einwirkungen und kann auch als Steinleim oder als anorganischer Kleber verwendet werden. Die Verwendungsfähigkeit ist schier unbegrenzt.

### Beispiel II (nur Rezeptur): (Carbonat-Beispiel)

- Komponente A:: 300 g Glassand (Strahlglassand, Berger + Bachmann)
- Komponente B:: 5 g Kieselsol 40% mit 5 g Phosphorsäure im Verhältnis 100:10 g Borsäure
- Komponente C:: 25 g von Kieselsol 40% 1:1 Lithiumpolysilikat (Van Baerle)

- Komponente V:: 80-90 g von 100 g Kalium-Trisilikat mit 2,5 g Aluminiumoxid und 10 g Borsäure vermischt mit 10-20 g Ca-Hydrogencarbonat (was einer Mischung der Vormischungen V1-V3 und V7 entspricht).

- Mischung A,B,C,V:: zu den erhaltenen 410g fügt man 20g Na-Metasilikat (Van Baerle) (Hydratisierungsmittel) zu und 50g von einer Mischung von 50g Kieselsol 40% im Verhältnis 3:1 Lithiumpolysilikat (Van Baerle) (V5 als Balancierungsmittel).
- Stabilisierung:: zu den erhaltenen 460g fügt man 20g Na-Metasilikat zu und 60-80g Weisszement (Dickenhoff, Deutschland). Die Kombination von Ca-Carbonat in der Komponente V mit dem Zement als Reaktionsmittel für die Hydratisierung, wirkt sich auf die Homogenisierung bei der späteren Verarbeitung des fertigen Granulats zu einem Werkstoff aus (das heisst, beim Anrühren des Fertiggranulats mit Dispersionsmittel, hier mit Wasser).

Das Ergebnis ist ein Granulat, das lagerfähig ist und mit Wasser angerührt sich zu einem festen Stoff verdichtet

Das Vorgehen wie Zufügen und Mischen für Beispiel II ist im wesentlichen gleich dem Vorgehen, wie in Beispiel I. Auch die nachfolgenden beispielsweisen Rezepturen werden in der gleichen Weise verarbeitet.

### Beispiel III (nur Rezeptur) (Kaolin-Beispiel)

- Komponente A:: 300g Quarzsand (Zimmerli Mineralstoffe, Zürich, Schweiz)
- Komponente B:: 5g eines Gemisches von 50g o-Phosphorsäure mit einem Anteil von 5g Aluminiumoxid
- Komponente C:: 50g eines Gemisches von Wasser 1:1 Kalium-Trisilikat
- Komponente V:: 85g eines Gemisches von 100g Kaliumtrisilikat mit 5g Ti-Oxid (Degussa), 10g Borsäure, 50g Kieselsol 40% mit einem Anteil von 5g Phosphorsäure im Verhältnis 100g:10g Borsäure, während 1 - 5 Stunden getrocknet. Sowie dem Trockenpulver beigefügte 10-20g Kaolin (Siegfried, Zofingen, Schweiz).
- Mischung A,B,C,V:: 20g Na-Metasilikat zu der 480g Mischung, als Hydratisierungsmittel für den weiteren Zusatz (von 50g Kieselsol 40% im Verhältnis 3:1 Lithiumpolysilikat) auf der Basis der 50g Komponente C (V5 als Balancierungsmittel).
- Stabilisierung:: 20g Na-Metasilikat zur weiteren Benetzung und Vernetzung mit 75g einer Mischung von 60g Weisszement und 15g Ca-Hydroxid.
- Granulat:: 600g als Endergebnis.

### Beispiel IV (nur Rezeptur)

- Komponente A:: 500g Korund weiss (bspw. für Implantationsmedizin, Berger + Bachmann) (gleiches Volumen wie 300g wegen Spezif.Gewicht)
- Komponente B:: 5g o-Phosphorsäure 100g:5g Aluminiumoxid
- Komponente C:: 50g Trikaliumsilikat und Wasser (im Mischverhältnis 1:1)
- Komponente V:: 135g eines Gemisches von 75g Kaliumtrisilikat (Van Baerle) mit 5g Al-Oxid, 20g Borosilikatglaspulver, 10g Borsäure, 10g Ca-Carbonat, 15g Zr-Hydroxid, 20g Natrium-Metasilikat.
- Mischung A,B,C,V:: 710g Füllstoff und Pulveranteil werden mit 50g eines Gemisches von 200g Kieselsol 40% mit 5g Zr-Oxid, 5g Titanoxid, 5g Borsäure, 5g Kaolin benetzt und an der Luft getrocknet.
- Stabilisierung:: 15g Na-Metasilikat zur weiteren Benetzung und Vernetzung mit 75g Weisszement.
- Granulat:: 850g als Endergebnis.

### Pigmentierung zu den Basisbeispielen:

### Beispiel V:

- Komponente A:: 300g Borosilikatglassand
- Komponente B':: 5g Kupfer-Hydroxidcarbonat (Pigmentstoff, Siegfried, Zofingen, Schweiz)
- Komponente B:: 25g eines Gemisches von 100g Kieselsol 40% mit einem Anteil von 5g o-Phosphorsäure im Verhältnis 100:10g Borsäure.
- Komponente C:: 25g eines Gemisches von 100g Kieselsol 40% im Verhältnis 1:1 mit Kaliumwasserglas 40% und 10%iger Wasserzugabe als ev. Verdünner.
- Vormischung V:: 85g eines Pulvergemisches aus 100g Kaliumtrisilikat mit 5g Zirkonoxid und 10g Borsäure, 50g Kieselsol 40% mit einem Anteil von 2,5g o-Phosphorsäure im Verhältnis 100:10g Borsäure, welches während ca. 8 bis 12 Stunden getrocknet und nachträglich mit 10g Hydrogencarbonat innig vermischt wurde (gebildet aus den Vormischungen V1-V3 und V7).

Die Komponenten A,B',B,C, werden folgendermassen miteinander vermischt:

Komponente A (300g) wird mit Komponente B' (5g) vollständig durchmischt und nachträglich mit der Komponente B (25g) vollständig benetzt, sodass nebst einer Konsistenz wie nasser Sand eine optimale Pigmentierung und Durchfärbung während der Reaktionsphase mit der Säure und Hydroxidcarbonat entsteht. Nach dem Mischvorgang wird die Komponente C (25g) in den nassen und durgefärbten Sand eingegossen und wieder innig vermengt. Die Marge neigt zum Gelieren und wird dadurch rieselfähig, bleibt aber noch feucht.

Die entstandene 390g Mischung AB'BC (feucht rieselfähig) werden mit der Komponente V (85g Trockenpulver) vermengt, wodurch ein fast trockenes Pulver entsteht. Um die Mischung zu homogenisieren und ev. Klumpen zu zerkleinern, wird die Marge durch ein feines Sieb gestossen. Die entstandene 475g Mischung lässt man ca. 1 bis 2 Std. stehen. Das Pulver wird durch die Wasserbindungszeit zu einer körnigen Pulvermischung hydratisiert, welche weiterverarbeitet wird (nicht lagerstabil).

Die 475g des oben hergestellten Gemenges werden mit 20g Na-Metasilikat versetzt. Dies geschieht durch inniges Mischen, wobei die Mischung etwas klebrig und feucht wird. Während dem Mischen giesst man sukzessive 50g eines Gebindes aus 100g Kieselsol 50% mit einem Anteil 100:30g Lithiumpolysilikat (V5) dazu. Während des Zugiessens des Soloxid-Polysilikats reagiert das Metasilikat als Wasserbinder und hydratisiert die Marge von 545g langsam während ca. 1 bis 2 Stunden zu einem körnigen Sand mit versch. Korngrössen. Die Mischung neigt nach der Abbindezeit zu Klumpenbildung und muss daher, um rieselfähige Körner herzustellen, nochmals durch ein Sieb gestossen werden. Die gewonnenen 545g des Gemisches werden in folgender Weise weiterverarbeitet. Das trockene Korngut enthält gebundenes Wasser, das durch Versetzen von weiteren 20g Na-Metasilikat weiter hydratisiert wird. Dabei entsteht ein feuchter und klebriger Zustand, welchem 70 bis 80g eines Gemisches von Weisszement 100:10g Kaolin zugesetzt wird. Unter kräftigem Mischen ev. nochmals durch ein Sieb gestossen, erhält man ein einheitliches Granulat von ca. 650g.

### Beispiel. VI (nur Rezeptur):

- Komponente A:: 300g Cristobalitsand (Berger, Mineralienhandel, Zürich, Schweiz)
- Komponente B:: 5g o-Phosphorsäure und Aluminiumoxid (Mischverhältnis 100g:5g)
- Komponente C:: 25g Kieselsol 40% im Verhaltnis 1:1 Kaliwasserglas 40%
- Komponente V:: 80-90 g von 100g Kaliumtrisilikat mit 5g anorgan. Farbpigment (bspw. Spinell, Bayer-Leverkusen), mit 5g Zirkonoxid und 10g Borsäure als Vl u. V2 in Kombination mit V4 nämlich 50g Kieselsol 40% im Verhältnis 100:5g o-Phosphorsäure vermischt und getrocknet. Weiter vermischt mit lOg Ca-Carbonat gemäss V7.
- Mischung A,B,C,V:: zu den erhaltenen 430g fügt man 20g Na-Metasilikat zu und V5 bzw. 50g einer Mischung von Kieselsol 40% 100:30g Lithiumpolysilikat (V5).
- Stabilisierung:: zu den erhaltenen 500g fügt man 20g Na-Metasilikat zu und eine Mischung von 70-80g Weisszement im Verhältnis 100:10g Calziumhydroxid. Die Kombination von Ca-Hydroxid mit dem Zement als Reaktionsmittel für die Hydratisierung, wirkt sich auf die Homogenisierung bei der spateren Verarbeitung des fertigen Granulates zu einem Werkstoff aus.

Man erhält 600g Granulat, das lagerfähig ist und, mit Wasser angerührt, sich zu einem festen Stoff verdichtet.

### Beispiel VII (nur Rezeptur):

- Komponente A:: 500g Aluminiumoxid (Korund weiss)
- Komponente B:: 10g einer Mischung von Phosphorsäure, Zirkonacetat, Titanoxid, Zirkonoxid (Mischverhältnis 100:10:5:5 g).
- Komponente C: 50g einer Mischung von Kieselsol 40%, Kaliumsilikat, Borsilikatglaspuder, Zirkoncarbonat (Mischverhältnis 100:50:20:10 g). Diese Mischung (Gel-Pulver) erstarrt schnell, so dass beim Mischen entsprechende Vorkehrungen getroffen werden müssen (siehe weiter unten).
- Komponente V:: 160g einer Mischung von Kaliumtrisilikat, Borsilikatglaspuder, Ca-Carbonat, Borsäure, Zirkonhydoxid (Mischverhältnis 100:25:10:10:15 g).
- Mischung A,B,C,V:: zu den 720g erhaltener Mischung fügt man zur Hydratisierung und Balancierung 20g Natriummetasilikat und 50g einer Mischung von Kieselsol 40%, Komponente B (siehe oben), Borosilikatglaspuder, Titanoxid, Zirkonoxid (Mischverhältnis 100:10:25:5:5 g).
- Stabilisierung:: zu den erhalatenen 790g Mischung fügt man 15g Natriummetasilikat und 75g Weisszement zu.

Man erhält damit 880g Granulat, das lagerfähig ist und durch Zugabe von Dispersionsmittel zum fertigen Kieselstoff verarbeitet wird.

### Beispiel VIII (nur Rezeptur)

- Komponente A:: 500g Aluminiumoxid (Korund weiss)
- Komponente B:: 5g einer Mischung von Phosphorsäure und Aluminiumoxid (Mischverhältnis 50g zu 5g).
- Komponente C:: 50g einer Mischung von Wasser, Kaliumtrisilikat, Aluminiumoxid, Borosilikatglaspuder (Mischverhältnis 100:100:5:20 g). Diese Mischung (Gel-Pulver) erstarrt schnell, sodass beim Mischen entsprechende Vorkehrungen getroffen werden müssen (siehe weiter unten).
- Komponente V:: 175g einer Mischung von Kaliumtrisilikat, Aluminiumoxid, Ca-Hydrogencarbonat, Borsäure, Zirkonhydroxid (Mischverhältnis 75:5:10:10:15 g).
- Mischung A,B,C,V:: die 730g der erhaltenen Mischung werden zur Hydratisierung und Balancierung versetzt mit 20g Natriummetasilikat und 50g einer Mischung von Kieselsol 40%, Komponente B (siehe oben), Borsäure, Titanoxid, Zirkonoxid, Kaolin (Mischverhältnis 100:5:5:5:5 g).
- Stabilisierung:: die erhaltenen 750g Mischung werden versetzt mit 15g Natriummetasilikat und 75g Weisszement.

Man erhält 890g Granulat, das lagerfähig ist und durch Zugabe von Dispersionsmittel zum fertigen Kieselstoff verarbeitet wird.

Wie bereits weiter oben angedeutet, erstarren ein Teil der zu mischenden Mischungen während dem Mischvorgang, sodass für das Mischen spezielle Vorkehrungen getroffen werden müssen. Es empfiehlt sich deshalb, die Mischungen schnell zu mischen und in noch nicht ganz erstarrtem Zustand durch ein Sieb zu drücken. Es können aber auch statische Mixer eingesetzt werden.

Carbonate in Reaktion mit Säure bewirken in der Mischung das Ausgasen von Kohlensäure. Die Kohlensäure aus der Umgebungsluft und diejenige in der Mischung bewirken die gewünschte Verkieselung. Ohne Kohlensäure findet keine gute Verkieselung bzw. Vernetzung statt. Optimale Pigmentierung bei niedriger Dosierung und Verwendung von Pigmenten. Mit Verwendung von Glasfüllstoffen erhält man eine komplette Durchfärbung. Die chemische Zusammensetzung erlaubt ferner Einfärbungen wie bei Schmucksteinen, z.B. Lapislazuli, Türkis, Rhodonit, Malachit. Damit ist gegenüber den bisher bekannten mineralischen Silikatwerkstoffen die hohe Wertschöpfung hervorzuheben, welche auch als Veredelungsverfahren neue Massstäbe im Stand der Technik ermöglicht.

## Patentansprüche

1. Verfahren zur Herstellung von Halbfabrikaten für feste mineralische Werkstoffe mit Hilfe der Sol-Gel-Technik auf der Basis von Soloxiden, Polysilikaten und Füllstoffen, **gekennzeichnet durch** folgende Verfahrensschritte:
a) Zusammenstellung und Verarbeitung einer ersten Corpuskomponente (A), welche als Füllstoffteil dient und Füllstoffe in Form von Makropartikeln enthält, die um ein Vielfaches grösser sind als die Teilchen der dispersen Phase des Sol-Gel-Kolloids, einer zweiten Corpuskomponente (B), welche als Reaktionsteil dient und eine Säure enthält, und einer dritten Corpuskomponente (C), welche als Pufferteil dient und Soloxid sowie Polysilikat enthält, wodurch ein Corpus (ABC) entsteht,
b) Hydratisierung dieses Corpus (ABC) durch Mischen mit einem Hydratisierungsmittel, so weit, bis eine balancierte, im wesentlichen trocken werdende, granulat-ähnliche Substanz entsteht,
c) Abbindung und Stabilisierung dieser Substanz durch Mischen mit einem Hydratierungsmittel, derart, dass ein Überschuss an Hydratisierungsmittel bestehen bleibt, wodurch ein lagerfähig stabilisiertes, reaktionsfähiges Halbfabrikat entsteht.

2. Verfahren nach Anspruch 1, **dadurch gekennzeichnet,** dass die erste Corpuskomponente (A) aus Borosilikatglas, Quarzglas oder Glassand oder Giessereisand oder mineralischen Sanden oder Aluminiumoxid oder einem organischen oder anorganischen Fasermaterial oder aus einer Mischung von zwei oder mehreren dieser Füllstoffe besteht.

3. Verfahren nach Anspruch 1 oder 2, **dadurch gekennzeichnet,** dass die zweite Corpuskomponente (B) Soloxid enthält.

4. Verfahren nach Anspruch 3, **dadurch gekennzeichnet,** dass mit Zugabe eines Anteils eines unsolierten Oxids zum Kieselsol der Soloxidgehalt erhöht und durch die Aufsolierung eine Gelierverzögerung erreicht wird.

5. Verfahren nach einem der Ansprüche 1-4, **dadurch gekennzeichnet,** dass eine Variationsmischung (V), welche Pigmentierungsmittel enthält, hergestellt wird und wahlweise in den Corpus (ABC) oder in die zweite Corpuskomponent (B) eingebracht wird, wodurch die Materialbeschaffenheit des Endproduktes variierbar ist.

6. Verfahren nach Anspruch 5, **dadurch gekennzeichnet,** dass die Variationsmischung (V) ein Hydratisierungsmittel enthält, welches die Hydratisierung des Corpus (ABC) unterstützt oder bewirkt.

7. Verfahren nach Anspruch 5 oder 6, **dadurch gekennzeichnet,** dass die Variationsmischung (V) aus einer oder mehreren Vormischungen (V1, V2) hergestellt wird.

8. Verfahren nach Anspruch 7, **dadurch gekennzeichnet,** dass die Vormischungen (V1, V2) eine saure oder basische Komponente wie Phosphorsäure oder Borsäure bzw. Hydroxide oder Carbonate aufweisen oder zu Vormischungen mit sauren oder basischen Komponenten zugemischt werden.

9. Verfahren nach einem der Ansprüche 5-8, **dadurch gekennzeichnet,** dass bei Zugaben zur Erzielung einer pigmentierten Komponente des Corpus (ABC) eine Säure zugegeben wird, die nach einer Verweilzeit eine Einfärbung der Komponente bewirkt.

10. Verfahren nach einem der Ansprüche 1-9, **dadurch gekennzeichnet,** dass als Hydratisierungsmittel Hydroxide oder Carbonate verwendet werden.

11. Verfahren nach Anspruch 10, **dadurch gekennzeichnet,** dass das Hydratierungsmittel ein Metasilikat (K- oder Na-Metasilikat) oder ein Zement wie Weisszement, Portlandzement ist.

12. Verfahren nach Anspruch 10, **dadurch gekennzeichnet,** dass die Carbonate Ca-Carbonat, Mg-Carbonat, Al-Carbonat, Ti-Carbonat, Zr-Carbonat oder deren Hydrogencarbonate allein oder in Mischung verwendet sind.

13. Verfahren nach Anspruch 10, **dadurch gekennzeichnet,** dass die Hydroxide Ca-Hydroxid, Mg-Hydroxid, Al-Hydroxid, Ti-Hydroxid, Zr-Hydroxid allein oder in Mischung verwendet sind.

14. Verfahren nach einem der Ansprüche 1-13, **dadurch gekennzeichnet,** dass den Vormischungen (V1, V2), den Variationsmischungen (V) oder dem Corpus (ABC) Metallsalze zur Pigmentierung zugesetzt werden.

15. Verfahren nach Anspruch 14, **dadurch gekennzeichnet,** dass die Metallsalze Al-, Fe-, Cu-, Cr-, Co-Salze sind, die als -sulfate, -nitrate, hydroxide eingesetzt werden.

16. Verfahren nach einem der Ansprüche 1-13, **dadurch gekennzeichnet,** dass den Vormischungen (V1, V2), den Variationsmischungen (V) oder dem Corpus (ABC) mineralische Stoffe zur Pigmentierung zugesetzt werden.

17. Verfahren nach Anspruch 16, **dadurch gekennzeichnet,** dass die mineralischen Stoffe Spinell, Lapislazuli, Malachit, Rhodonit, Türkis sind, die vorzugsweise in feingemahlenem Zustand verwendet werden.

18. Verfahren zur Herstellung von festen mineralischen Werkstoffen aus einem Halbfabrikat nach einem der Ansprüche 1-17, **dadurch gekennzeichnet,** dass dem reaktionsfähigen Halbfabrikat ein Dispersionsmittel zugegeben wird, so dass es vollständig zu einem festen Werkstoff ausreagiert.

19. Verfahren nach Anspruch 18, **dadurch gekennzeichnet,** dass das Dispersionsmittel Wasser ist.

20. Halbfabrikate, hergestellt nach einem der Verfahren gemäss den Ansprüchen 1-17.

21. Halbfabrikat nach Anspruch 20, **dadurch gekennzeichnet,** dass es durch Einmengung von Dispersionsmittel zu einem aushärtenden Werkstoff verarbeitbar ist.

22. Produkte, hergestellt nach dem Verfahren gemäss Anspruch 18 oder 19.

23. Produkt nach Anspruch 22, **dadurch gekennzeichnet,** dass es ein ausgehärteter Werkstoff ist.

## Claims

1. Process for producing semifinished products for solid mineral working materials, with the aid of the solgel-technique; based on sol oxiides, polysilicates and fillers, **characterized by** the following process steps:
a) bringing together and processing a first component (A) of a base material, which serves as a filler portion and comprises fillers in the form of macroparticles, which are larger by many times than the particles of the disperse phase of the sol-gel colloid, a second component (B) of a base material, which serves as reactive portion and comprises an acid, and a third component (C) of a base material, which serves as buffer portion and comprises sol oxide and also polysilicate, giving a base material (ABC),
b) hydrating this base material (ABC) by mixing with a hydrating agent, until a balanced substance is formed which is essentially becoming dry and is similar to granules,
c) setting and stabilizing this substance by mixing with a hydration agent in such a way that an excess of hydrating agent remains, giving a stabilized, storage-stable, reactive semifinished product.

2. Process according to Claim 1, **characterized in that** the first component (A) of the base material is composed of borosilicate glass, quartz glass or glass sand or foundry sand or mineral sands or aluminium oxide or an organic or inorganic fibre or of a mixture of two or more of these fillers.

3. Process according to Claim 1 or 2, **characterized in that** the second component (B) of the base material comprises sol oxide.

4. Process according to Claim 3, **characterized in that** the sol oxide content is increased with addition to the silica sol of an amount of oxide which has not been made into a sol, and gelling is delaid by solling on.

5. Process. according to any one of Claims 1-4, **characterized in that** a modifying mixture (V), which comprises pigmenting agents, is produced and may be introduced into the base material (ABC) or into the second component (B) of the base material, making it possible to vary the material characteristics of the end product.

6. Process according to Claim 5, **characterized in that** the modifying mixture (V) comprises a hydrating agent which promotes or brings about the hydration of the base material (ABC).

7. Process according to Claim 5 or 6, **characterized in that** the modifying mixture (V) is produced from one or more premixes (V1, V2).

8. Process according to Claim 7, **characterized in that** the premixes (V1, V2) have an acid or basic component, such as phosphoric acid or boric acid and hydroxides or carbonates, respectively, or are admixed with premixes with acid or basic components.

9. Process according to any one of Claims 5 to 8, **characterized in that** in the case of additions for achieving a pigmented component of the base material (ABC), an acid is added which, after a reaction time, brings about pigmentation of the component.

10. Process according to any one of Claims 1-9, **characterized in that** hydroxides or carbonates are used as hydrating agents.

11. Process according to Claim 10, **characterized in that** the hydration agent is a metasilicace (K or Na metasilicate) or a cement, such as white cement or Portland cement.

12. Process according to Claim 10, **characterized in that** the carbonates used are Ca carbonate, Mg carbonate, Al carbonate, Ti carbonate, Zr carbonate or their hydrogencarbonates, alone or in a mixture.

13. Process according to Claim 10, **characterised in that** the hydroxides used are Ca hydroxide, Mg hydroxide, Al hydroxide, Ti hydroxide or Zr hydroxide, alone or in a mixture.

14. Process according to any one of Claims 1-13, **characterized in that** metal salts are added for pigmentation to the premixes (V1, V2), to the modifying mixtures (V) or to the base material (ABC).

15. Process according to Claim 14, **characterized in that** the metal salts are Al, Fe, Cu, Cr, or Co salts, which are used as sulphates, nitrates or hydroxides of these metals.

16. Process according to any one of Claims 1-13, **characterized in that** mineral substances are added for pigmentation to the premixes (V1, V2), to the modifying mixtures (V) or to the base material (ABC).

17. Process according to Claim 16, **characterized in that** the mineral substances are spinel, lapis lazuli, malachite, rhodonite or turquoise, preferably used in finely ground condition.

18. Process for producing solid mineral working materials from a semifinished product according to any one of claims 1-17, **characterized in that** a dispersion medium is added to the reactive semifinished product, so that it reacts fully to completion, to give a solid working material.

19. Process according to Claim 18, **characterized in that** the dispersion medium is water.

20. Semifinished products, produced by one of the processes according to Claims 1-17.

21. Semifinished product according to Claim 20, **characterized in that** it is processable by mixing-in dispersion medium to give a working material which hardens.

22. Products produced by the process according to Claim 18 or 19.

23. Product according to Claim 22, **characterized in that** it is a hardened working material.

## Revendications

1. Procédé de fabrication de semi-produit pour matériaux minéraux solides à l'aide de la technique sol-gel à base de sol-oxydes, de polysilicates et de matières de charge, caractérisé par les étapes suivantes :
a) Réunion et traitement d'un premier constituant de corpus (A), qui sert de partie matière de charge, et qui contient des matières de charge sous forme de macro-particules, dont la granulométrie est un multiple de celle des particules de la phase dispersée du colloïde sol-gel, d'un deuxième constituant de corpus (B), qui sert de partie réaction et qui contient un acide, et d'un troisième constituant de corpus (C), qui sert de partie tampon et contient un sol-oxyde ainsi qu'un polysilicate, ce qui forme un corpus (ABC),
b) hydratation de ce corpus (ABC) par mélange à un agent d'hydratation, jusqu'à ce qu'il se forme une substance de type granulat, équilibrée, devenant essentiellement sèche,
c) prise et stabilisation de cette substance par mélange à un agent d'hydratation, de telle sorte qu'il reste un excès d'agent d'hydratation, ce qui forme un semi-produit réactif, et stabilisé au stockage.

2. Procédé selon la revendication 1, caractérisé en ce que le premier constituant de corpus (A) est constitué de verre au borosilicate, de verre de quartz ou de sable quartzeux, ou de sable de fonderie, ou encore de sables minéraux ou d'oxyde d'aluminium, ou d'un matériau fibreux organique ou minéral, ou d'un mélange d'au moins deux de ces matières de charge.

3. Procédé selon la revendication 1 ou 2, caractérisé en ce que le deuxième constituant du corpus (B) contient un sol-oxyde.

4. Procédé selon la revendication 3, caractérisé en ce que, par addition d'une certaine quantité d'un oxyde non-solé au sol de silice, on augmente la teneur en sol-oxyde, et, par isolement, on arrive à un ralentissement de la gélification.

5. Procédé selon l'une des revendications 1 à 4, caractérisé en ce qu'on prépare un mélange variable (V) contenant des agents de pigmentation, et on l'introduit au choix dans le corpus (ABC) ou dans le deuxième constituant (B) du corpus, ce qui permet de faire varier la texture du produit final en tant que matériau.

6. Procédé selon la revendication 5, caractérisé en ce que le mélange variable (V) contient un agent d'hydratation, qui favorise ou provoque l'hydratation du corpus (ABC).

7. Procédé selon la revendication 5 ou 6, caractérisé en ce que le mélange variable (V) est préparé à partir d'un ou plusieurs mélanges préalables (V1, V2).

8. Procédé selon la revendication 7, caractérisé en ce que les mélanges préalables (V1, V2) comportent un constituant acide ou basique tel que l'acide phosphorique ou l'acide borique, ou des hydroxydes ou des carbonates, ou encore sont mélangés à des mélanges préalables comportant des constituants acides ou basiques.

9. Procédé selon l'une des revendications 5 à 8, caractérisé en ce que, lors des additions destinées à donner un constituant pigmenté du corpus (ABC), on ajoute un acide qui, après un certain temps de séjour, provoque une coloration du constituant.

10. Procédé selon l'une des revendications 1 à 9, caractérisé en ce qu'on utilise en tant qu'agents d'hydratation des hydroxydes ou des carbonates.

11. Procédé selon la revendication 10, caractérisé en ce que l'agent d'hydratation est un métasilicate (métasilicate de K ou de Na) ou un ciment, tel que le ciment blanc, le ciment Portland.

12. Procédé selon la revendication 10, caractérisé en ce que les carbonates que sont le carbonate de Ca, le carbonate de Mg, le carbonate d'Al, le carbonate de Ti, le carbonate de Zr ou leurs hydcogénocarbonates sont utilisés seuls ou en mélange.

13. Procédé selon la revendication 10, caractérisé en ce que les hydroxydes que sont l'hydroxyde de Ca, l'hydroxyde de Mg, l'hydroxyde d'Al, l'hydroxyde de Ti, l'hydroxyde de zr, sont utilisés seuls ou en mélange.

14. Procédé selon l'une des revendications 1 à 13, caractérisé en ce que, pour la pigmentation, on ajoute des sels métalliques aux mélanges préalables (V1, V2), aux mélanges variables (V) ou au corpus (ABC).

15. Procédé selon la revendication 14, caractérisé en ce que les sels métalliques sont des sels d'Al, de Fe, de Cu, de Cr, de Co, qui sont utilisés sous forme de leurs sulfates, nitrates, hydroxydes.

16. Procédé selon l'une des revendications 1 à 13, caractérisé en ce que, pour la pigmentation, on ajoute des substances minérales aux mélanges préalables (V1, V2), aux mélanges variables (V) ou au corpus (ABC).

17. Procédé selon la revendication 16, caractérisé en ce que les substances minérales sont la spinelle, le Lapislazuli, la malachite, la rhodonite, la turquoise, qui de préférence sont utilisés sous forme finement broyée.

18. Procédé de fabrication de matériaux minéraux solides à partir d'un semi-produit selon l'une des revendications 1 à 17, caractérisé en ce qu'on ajoute au semi-produit réactif un dispersant de façon qu'il réagisse complètement pour donner un matériau solide.

19. Procédé selon la revendication 18, caractérisé en ce que le dispersant est l'eau.

20. Semi-produits, fabriqués par l'un des procédés selon les revendications 1 à 17.

21. Servi-produit selon la revendication 20, caractérisé en ce qu'il peut être transformé en un matériau durcissable par incorporation d'un dispersant.

22. Produits fabriqués par le procédé selon la revendication 18 ou 19.

23. Produit selon la revendication 22, caractérisé en ce qu'il s'agit d'un matériau durci.
